# EUROPEAN PATENT SPECIFICATION

(11) **EP 0 367 346 B1**
(45) Date of publication and mention of the grant of the patent: **10.02.1993**
(21) Application number: 89202729.3
(22) Date of filing: 30.10.1989
(51) Int. Cl.: F28F 19/06, F28F 9/18, B01D 1/30, B01D 1/06

(54) **Distributor casing for heat exchangers with corrosion-proof lining**
Verteilergehäuse für Wärmeaustauscher mit korrosionsbeständigem Überzug
Carter de répartition pour échangeurs de chaleur avec revêtement anticorrosion

(30) Priority: 03.11.1988 IT 2248888
(43) Date of publication of application: 09.05.1990
(73) Proprietor: FBM-HUDSON ITALIANA S.p.A., I-24030 TERNO D'ISOLA (Bergamo) (IT)
(72) Inventor: Colli, Luigi, I-21052 Busto Arsizio (Varese) (IT); Forlani, Giulio, I-20136 Milano (IT)
(74) Representative: Faraggiana, Vittorio, Dr. Ing.

(56) References cited:
- EP-A- 0 082 920
- DE-A- 3 027 768
- DE-C- 228 406
- FR-A- 745 834
- US-A- 3 365 097
- US-A- 4 485 960
- PATENT ABSTRACTS OF JAPAN, vol. 12, no. 260 (M-720)[3107], 21st July 1988, page 92 M 720; & JP-A-63 41 795
- PATENT ABSTRACTS OF JAPAN, vol. 6, no. 13 (M-171)[1106], 13th November 1982, page 134 M 171; & JP-A-57 130 795
- H. Titze, "Elemente des Apparatebaus", 1963, Springer Verlag, Berlin, pages 198, 199

## Description

The invention relates to a heat exchanger comprising the features as indicated in the precharacterising part of claim 1.

It is known that pressure vessels for heat exchange equipment (for example, distributor casings for heat exchangers, reactors, stripper, etc.) can be made with internal surfaces lined with materials which are highly resistant to corrosion.

It is further known for the tube plate to be made in the shape of a tank with radiused bottom and sides so as not to have sharp corners, which are possible stress raisers, and so as to bring the seam between the tube plate and the cylindrical wall of the vessel on the same plane, as is customary with pressure vessels.

Finally it is known that one type of higly corrosion proof internal lining can be made from titanium. This material however is difficult to use, since it cannot be welded onto the steel of which the parts to be lined are made. Use is therefore made of titanium-plated steel (usually by explosive cladding).

The state of the art is shown, for example, in Titze "Elemente des Apparatebaues" 1963, Springer-Verlag, Berlin, pag. 198-9.

One disadvantage shown by the known technique is linked to the difficultly of ensuring the continuity of the titanium lining on the seams between the parts making up the vessel, also in view of the characteristics that such seams must have in order to withstand the high pressures to which they are subjected.

In particular, it is critical the seam between the cylindrical part of the vessels and the tube plate which closes one end of them.

In fact, since the cladding of the tube plate is achieved by explosion, the shape of the tank gives rise to problems in obtaining a coating of uniform thickness, and considerable stress on the upper edges of the tank during the explosion, due to the fact that they obstruct the expansion of the explosion gases. The stress could lead to chipping of the rim of the plate, resulting in irreparable damage to the plate itself and its consequent rejection.

Moreover, due to the radius between the bottom and wall of the tube plate, the tubes of the latter can only be fitted in its central area, thus wasting a considerable amount of surface inside the vessel.

It is the object of this invention to remedy the aforementioned problems by providing a pressure vessel, such as a distributor casing for heat exchangers, with a continuous titanium lining and in which the seams, especially between the tube plate and the cylindrical side wall are easy to carry out and highly reliable.

In accordance with the invention, this object is solved by a heat exchanger comprising a distributor casing with a cylindrical wall peripherally abutting onto a discoidal base plate welded thereto and penetrated by a plurality of tubes, the casing and the tube plate being internally lined with corrosion proof material, characterized in that, said plate being provided with an annular groove, the outer edge of the groove being in correspondence with the internal perimeter of the cylindrical wall of the distributor casing, in proximity of the joint between wall and plate, said groove containing a coupling element made out of corrosion proof material and having a form complementary to said groove, said coupling element, welded in place, connecting with its surface, facing the inside of the casing, the lining of the tube plate to the lining of the cylindrical wall and welded thereto.

In order to give a clearer explanation of this invent ion and its advantages with respect to the known technique, a description is given hereunder, with reference to the accompanying drawings, of a possible exemplary embodiment using such principles, in which:
- figure 1 shows a schematic side elevation cross-sectional view of a distributor casing constructed according to the innovatory principles claimed herein;
- figure 2 shows an enlarged partial view of the casing of figure 1.

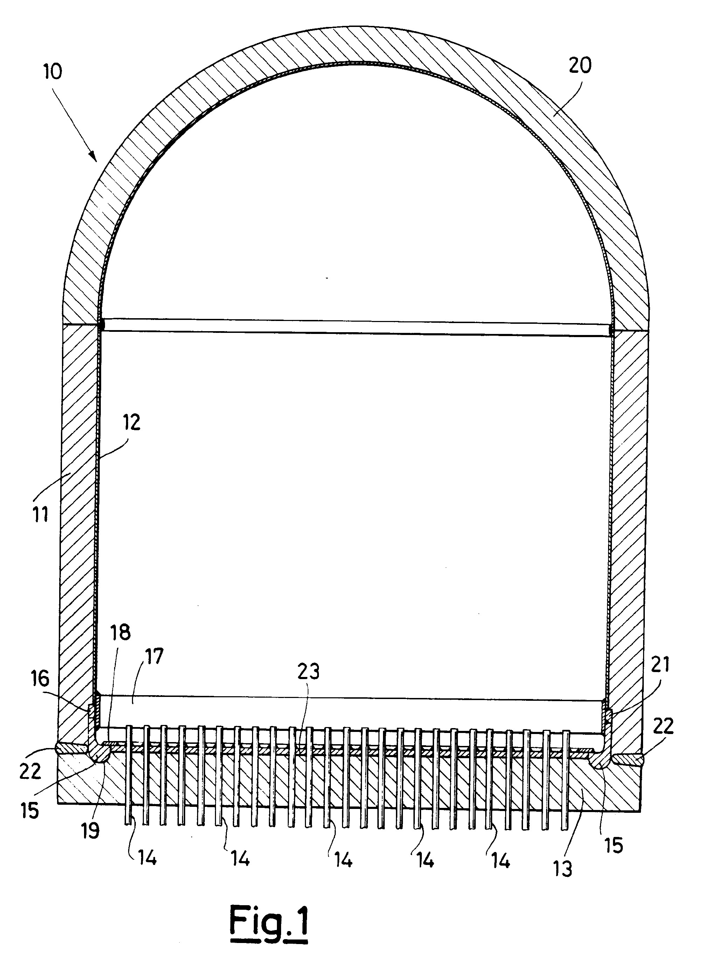

With reference to the figures, a distributor casing 10 of the type fitted to the head of tube nests for heat exchangers comprises according to the invention, as can be seen in figure 1, a cylindrical portion 11 fitted with a lining consisting of a suitably shaped sheet 12 of corrosion-proof material, for example titanium-plated steel.

A disc-shaped tube plate 13 carrying a plurality of tubes 14 is made substantially flat and explosion cladded on its central area 23 with titanium. Said plate is butt welded to the cylindrical portion 11 (reference 22 indicates the weld bead between the parts).

The upper part of the casing is closed by a dome-shaped section 20 made and connected to the cylindrical portion according to the known technique and is also covered with titanium according to the known method.

There are conduits and devices, also made according to known techniques and consequently not shown or described herein, to enable the casing to carry out the function for which it is designed.

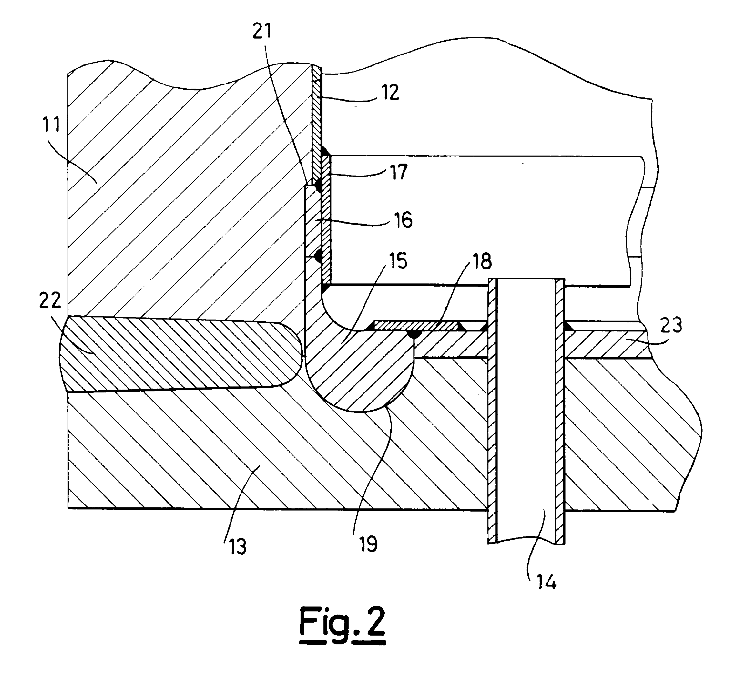

As can be more clearly seen in figure 2, the tube plate is provided with a semicircular section annular groove 19 in correspondence with the internal perimeter of the cylindrical wall, with its concavity substantially tangent to the seam between the plate 13 and the wall 11.

A coupling element 15 made of titanium, complementary to the recess 19 and welded in place, is provided with an inward facing surface which connects the lining of the tube plate to the lining of the wall 11.

In order to make said coupling element easier to fit, a titanium insert 16 is positioned and welded between the edge of the lateral lining and the seam itself in correspondence with a step 21 on the wall 11. Said step serves the purpose of bringing the external surface of the coupling 15 up to the same level as that of the lining 12, which is of a different thickness.

Titanium butt straps 17, 18 are positioned and welded between the cylindrical wall and the coupling 15 and between the coupling 15 and the tube plate so as to ensure continuity of the titanium lining also in correspondence with the weld and couplings between said parts.

In order to make them easier to fit in position, the coupling 15, insert 16 and butt straps 17, 18 may be made in radially cut segments, as can be easily inferred by anyone expert in the art.

Due to the shape of the coupling 15 it is possible to bring the weldings between the linings of the wall 11 and of the plate 13 onto the same plane thereby avoiding stress raisers and sharp corners between the internal wall of the vessel.

The connection between the tube plate and the cylindrical wall described herein offers numerous advantages which make it possible to produce high quality vessels.

By making the tube plate substantially flat in shape it can be uniformly cladded without damage to its outer edges during the cladding process, as occurs with tank-shaped tube plates made by means of the known technique.

Furthermore, the shape of the coupling 15 enables the entire surface of the tube plate to be utilized for passage of the heat exchanger tubes, as far as the coupling, thereby making it possible to obtain distributor casings, with the same number of tube nests, with more limited dimensions than those obtainable with tank-shaped tube plates.

Although titanium has been found to be the material most advantageously used for the lining, any other suitable corrosion-proof material can obviously be used.

## Claims

1. Heat exchanger, comprising a distributor casing (10), with a cylindrical wall (11) peripherally abutting onto a discoidal base plate (13) welded thereto and penetrated by a plurality of tubes (14), the casing (10) and the tube plate (13) being internally lined with corrosion proof material, characterized in that said plate (13) being provided with an annular groove (19), the outer edge of the groove being in correspondence with the internal perimeter of the cylindrical wall (11) of the distributor casing (10), in proximity of the joint between wall and plate, said groove (19) containing a coupling element (15) made out of corrosion proof material and having a form complementary to said groove (19), said coupling element (15), welded in place, connecting with its surface, facing the inside of the casing (10), the lining of the tube plate (13) to the lining of the cylindrical wall (11) and welded thereto.

2. Heat exchanger as claimed in claim 1, characterized by the fact that said coupling element (15) comprises a cylindrical extension (16) designed to adhere to the lateral wall (11).

3. Heat exchanger as claimed in claim 1, characterized by the fact that said coupling element (15) is made of a plurality of segments (15) welded together after being fitted into the groove (19).

4. Heat exchanger as claimed in claim 1, characterized by the fact that said groove (19) has a substantially semicircular cross section.

5. Heat exchanger as claimed in claim 2, characterized by the fact that said extension (16) is housed in a depressed annular seat (21) in the cylindrical wall (11).

6. Heat exchanger as claimed in claim 5, characterized by the fact that the external edge of said extension (16) is in the form of a welded element (16) after being fitted into the depressed annular seat (21).

7. Heat exchanger as claimed in claim 1, characterized by the fact that butt straps (17, 18) made of corrosion-proof material welded laterally to the underlying parts are provided on the seams between the lining and the coupling element (15) and between the parts of the latter.

8. Heat exchanger as claimed in claim 1, characterized by the fact that the lining of the cylindrical wall (11) consists of a sheet (12) of corrosion-proof material at least partially comprising its surface facing towards the inside of the cylinder, bent in order to adapt to the internal wall (11) of the cylinder.

9. Heat exchanger as claimed in claim 1, characterized by the fact that the lining of the base plate (13) consists of a corrosion proof material applied by means of explosive cladding.

10. Heat exchanger as claimed in the previous claims, characterized by the fact that the corrosion-proof material is titanium.

## Patentansprüche

1. Wärmeaustauscher, bestehend aus einem Verteilergehäuse (10), mit einer zylindrischen Wand (11), die peripherisch an einer scheibenförmigen Grundplatte (13) anliegt, an dieser angeschweißt ist und durch eine Vielzahl von Rohren (14) durchdrungen wird, wobei das Gehäuse (10) und die Rohrplatte (13) innen mit korrosionsbeständigem Material ausgekleidet sind, dadurch gekennzeichnet,
daß die Platte (13) mit einer ringförmigen Kerbe (19) vorgesehen ist, wobei die äußere Kante der Kerbe mit dem inneren Umfang der zylindrischen Wand (11) des Verteilergehäuses (10) in der Nähe der Verbindung zwischen Wand und Platte korrespondiert, daß die Kerbe (19) ein Kopplungselement (15) enthält, welches aus korrosionsbeständigem Material besteht und eine komplementäre Form zur Kerbe (19) aufweist, daß das Kopplungselement (15), nachdem es am richtigen Platz angeschweißt ist, mit seinen Oberflächen, welche der Innenseite des Gehäuses (10) zugekehrt sind, den Überzug der Rohrplatte (13) an dem Überzug der zylindrischen Wand (11) befestigt und daran angeschweißt wird.

2. Wärmeaustauscher nach Anspruch 1, dadurch gekennzeichnet, daß das Kopplungselement (15) eine zylindrische Verlängerung (16) umfaßt, welche ausgebildet ist, um an der seitlichen Wand (11) anzuhaften.

3. Wärmeaustauscher nach Anspruch 1, dadurch gekennzeichnet, daß das Kopplungselement (15) aus einer Vielzahl von Segmenten (15) besteht, welche nach dem Einlegen in die Kerbe (19) zusammengeschweißt werden.

4. Wärmeaustauscher nach Anspruch 1, dadurch gekennzeichnet, daß die Kerbe (19) einen im wesentlichen halbkreisförmigen Querschnitt aufweist.

5. Wärmeaustauscher nach Anspruch 2, dadurch gekennzeichnet, daß die Verlängerung (16) in einer in der zylindrischen Wand (11) befindlichen herabgedrückten ringförmigen Auflage (21) untergebracht ist.

6. Wärmeaustauscher nach Anspruch 5, dadurch gekennzeichnet, daß die äußere Kante der Verlängerung (16) die Form eines geschweißten Elements (16) hat, nachdem sie in die herabgedrückte ringförmige Auflage (21) eingelegt worden ist.

7. Wärmeaustauscher nach Anspruch 1, dadurch gekennzeichnet, daß Flachlaschen (17, 18), welche aus korrosionsbeständigem Material bestehen und seitlich an darunterliegenden Teilen angeschweißt sind, an der Naht zwischen dem Oberzug und dem Kopplungselement (15) und zwischen den Teilen der letztgenannten vorgesehen sind.

8. Wärmeaustauscher nach Anspruch 1,dadurch gekennzeichnet, daß der Überzug der zylindrischen Wand (11) aus einer Platte (12) aus korrosionsbeständigem Material besteht, deren Oberfläche mindestens teilweise der Innenseite des Zylinders zugekehrt ist und die gebogen ist, um sich der inneren Wand (11) des Zylinders anzupassen.

9. Wärmeaustauscher nach Anspruch 1, dadurch gekennzeichnet, daß der Oberzug der Grundplatte (13) aus einem korrosionsbeständigen Material besteht, welches durch Mittel des Explosiv-Überziehens aufgebracht wird.

10. Wärmeaustauscher nach einem der vorhergehenden Ansprüche, dadurch gekennzeichnet, daß das korrosionsbeständige Material Titan ist.

## Revendications

1. Echangeur de chaleur comprenant un carter de répartition (10) avec une paroi cylindrique (11) en butée périphériquement contre une plaque de base discoïdale (13) qui lui est soudée et qui est traversée par une pluralité de tubes (14), le carter (10) et la plaque tubulaire (13) étant revêtus intérieurement d'une matière résistante à la corrosion, caractérisé en ce que la dite plaque (13) est pourvue d'une rainure annulaire (19) dont le bord extérieur est en correspondance avec le périmètre intérieur de la paroi cylindrique (11) du carter de répartition (10), cette rainure (19) contenant, à proximité du joint entre la paroi et la plaque, un élément de raccordement (15) fait en matière résistante à la corrosion et ayant une forme complémentaire à celle de la rainure (19), cet élément de raccordement (15), soudé en place, raccordant par sa surface tournée vers l'intérieur du carter (10) le revêtement de la plaque tubulaire (13) au revêtement de la paroi cylindrique (11) et étant soudé à ce dernier.

2. Echangeur de chaleur selon la revendication 1 caractérisé par le fait que l'élément de raccordement (15) comprend un prolongement cylindrique (16) conçu pour adhérer à la paroi latérale (11).

3. Echangeur de chaleur selon la revendication 1 caractérisé par le fait que l'élément de raccordement (15) est réalisé en une pluralité de segments (15) soudés ensemble après avoir été ajustés dans la rainure (19).

4. Echangeur de chaleur selon la revendication 1 caractérisé par le fait que la rainure (19) a une section droite substantiellement semi-circulaire.

5. Echangeur de chaleur selon la revendication 2 caractérisé par le fait que le prolongement (16) est logé dans un siège annulaire en dépression (21) prévu dans la paroi cylindrique (11).

6. Echangeur de chaleur selon la revendication 5 caractérisé par le fait que le bord extérieur du prolongement (16) est sous forme d'un élément (16) soudé après avoir été ajusté dans le siège annulaire en dépression (21).

7. Echangeur de chaleur selon la revendication 1 caractérisé par le fait que des bandes couvre-joint (17,18) faites en matière résistante à la corrosion soudées latéralement aux pièces sous-jacentes sont disposées sur les cordons de soudure existant entre le revêtement et l'élément de raccordement (15) et entre les parties de ce dernier.

8. Echangeur de chaleur selon la revendication 1 caractérisé par le fait que le revêtement de la paroi cylindrique (11) consiste en une feuille (12) au moins partiellement en matière résistante à la corrosion comprenant sa surface tournée vers l'intérieur du cylindre, incurvée afin de s'adapter à la surface intérieure de la paroi (11) du cylindre.

9. Echangeur de chaleur selon la revendication 1 caractérisé par le fait que le revêtement de la plaque de base (13) consiste en une matière résistante à la corrosion appliquée au moyen d'un plaquage à l'explosif.

10. Echangeur de chaleur selon les revendications précédentes caractérisé par le fait que la matière résistante à la corrosion est le titane.
